# EUROPEAN PATENT SPECIFICATION

(11) **EP 2 749 090 B1**
(45) Date of publication and mention of the grant of the patent: **15.04.2020**
(21) Application number: 11876116.2
(22) Date of filing: 21.11.2011
(51) Int. Cl.: H04W 52/14, H04W 52/38, H04W 52/24, H04W 52/40, H04W 72/04

(54) **IMPROVED TELECOMMUNICATIONS SYSTEM, BASE STATION, USER EQUIPMENT AND METHOD FOR ENSURING HIGH QUALITY CONNECTIONS**
VERBESSERTES TELEKOMMUNIKATIONSSYSTEM, BASISSTATION, BENUTZERVORRICHTUNG UND VERFAHREN ZUR SICHERSTELLUNG VON QUALITATIV HOCHWERTIGEN VERBINDUNGEN
SYSTÈME DE TÉLÉCOMMUNICATIONS AMÉLIORÉ, STATION DE BASE, ÉQUIPEMENT UTILISATEUR ET PROCÉDÉ PERMETTANT DE GARANTIR DES CONNEXIONS DE GRANDE QUALITÉ

(43) Date of publication of application: 02.07.2014
(73) Proprietor: Telefonaktiebolaget LM Ericsson (publ), 164 83 Stockholm (SE)
(72) Inventor: FRÖBERG OLSSON, Jonas, S-590 74 Ljungsbro (SE); FALCONETTI, Laetitia, 52070 Aachen (DE); LANDSTRÖM, Sara, S-974 34 Luleå (SE)
(74) Representative: Brann AB
(86) International application number: PCT/SE2011/051395
(87) International publication number: WO 2013/077782

(56) References cited:
- EP-A1- 2 448 338
- WO-A1-2010/124725
- WO-A1-2010/150807
- WO-A1-2011/083797
- WO-A1-2011/100673
- WO-A2-2010/035966
- NAIZHENG ZHENG ET AL.: 'Uplink Coordinated Multi-Point for LTE-A in the Form of Macro-Scopic Combining' VEHICULAR TECHNOLOGY CONFERENCE (VTC 201 0-SPRING) 16 May 2010, XP031696207

## Description

### TECHNICAL FIELD

This application relates to a telecommunications system, a base station, a user terminal and a method for ensuring high quality connections between a base station and a user equipment, and in particular to a telecommunications system, a base station, a user equipment and a method for ensuring high quality connections between a base station and a user equipment with a reduced interference caused to surrounding user equipments.

### BACKGROUND

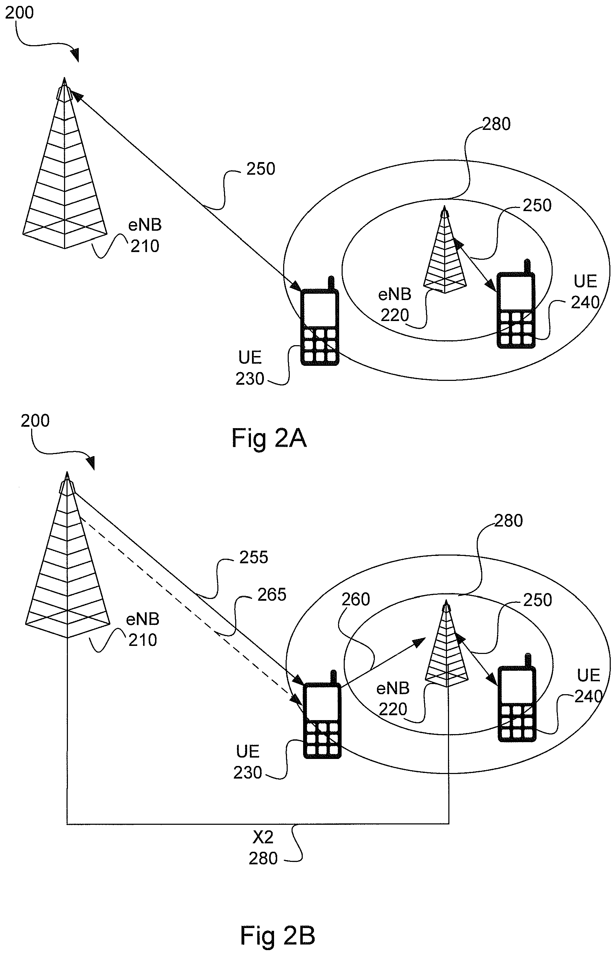

In contemporary telecommunications systems it is common that a base station serving a cell handles more than one user equipment. It is also common that some cells overlap or are arranged closely to one another. This is necessary in order to allow for hand-overs. However, in some situations a user equipment may be located between two base stations and the choice of which base station that should handle the user equipment is not an obvious one. Figure 2A is a schematic illustration of an exemplary system 200 wherein a macro base station 210 and a pico base station 220 are arranged. Also present in the system 200 are two mobile communications devices or User Equipments (UE) 230 and 240. The first UE 230 is set up to communicate with the macro base station 210 and the second UE 240 is set up to communicate with the pico base station 220, being clearly within a cell 280 being handled by the pico base station 220. Which UE that is to be set up to which base station is, in one embodiment, decided on by determining from which base station 210, 220 that the UE 230, 240 receives the strongest signal. In figure 2A both UEs 230, 240 are connected to a respective base station (eNB) 210, 220 through an up-link/down-link channel 250.

As is illustrated in figure 2A the first UE 230 is actually closer to the pico eNB 220 than to the macro eNB 210, but as the macro eNB 210 has a stronger transmitter the first UE 230 receives a stronger signal from the macro eNB 210 than from the pico eNB 220 and will therefore be configured to establish data and control channels with the macro eNB 210.

To ensure a high quality uplink data channel to the macro eNB 210, the first UE 230 is configured to send or transmit outgoing data traffic at a high power level to ensure that the data is well received at the macro eNB 210 due to the long distance to the macro eNB 210. This high power signal adds interference to the data channel 250 between the second UE 240 and the pico eNB 220. In an LTE system (Long Term Evolution) the macro base station will cause high interference on the PDCCH channel (Physical Downlink Control CHannel) on which scheduling information is sent to the UE 230. Thus, two problems arise, namely that the first UE 230 is forced to run at a high power level, thereby draining the battery of the first UE 230 more quickly, and that the first UE will interfere with the second UE's 240 data transmissions. WO 2010/150807 A1 and EP 2448338 A1 (European family member of WO 2010/150807 A1) are directed towards a method for controlling transmission power in uplink CoMP. Uplink Coordinated Multi-point for LTE-A in the Form of Macro-Scopic Combining describes uplink CoMP reception in which the transmitted signal from the user equipment is jointly received at multiple geographically separated eNB antennas.

There is thus a need for a manner of ensuring a high quality reception at a base station while at the same time reducing the power level needed and without interfering with data transmissions of other UEs.

### SUMMARY

It is an object of the teachings of this application to overcome the problems listed above by providing a first base station for use in a telecommunications system which further comprises at least a second base station and a user equipment, wherein said first base station comprises a memory for storing instructions and data, a radio-frequency interface for communicating with said user equipment, and a controller, wherein said controller is configured to receive a measurement from said user equipment, wherein said measurement relates to a received signal strength at said second base station in said telecommunications system. The controller is configured to determine a first path loss between said user equipment and said second base station based on said received signal strength. The controller is further configured to determine, if said first path loss is lower than a second path loss between said first base station and said user equipment, and, if so, send a reconfiguration message to said user equipment instructing said user equipment to reconfigure a transmitting power of said user equipment with respect to said second base station, wherein said user equipment reconfigures its transmit power with reference to said received signal strength at the second base station, wherein after reconfiguration, said user equipment transmits all uplink data only to said second base station at a transmission power that is lower than a transmission power required to transmit all the uplink data to the first base station, and wherein said first base station is configured to send downlink data to said user equipment. In one embodiment the base station is configured to send a reconfiguration message to said second base station instructing said second base station to receive said uplink data from said user equipment. The first base station is further configured to receive said uplink data from said second base station, said uplink data originating from said user equipment.

This allows a base station to enable a user equipment to operate at a lower power level while maintaining a same signal quality level. Alternatively or additionally this also allows base stations to be utilized to the full extent in a telecommunications system without causing increased latency for requests.

It is a further object of the teachings of this application to overcome the problems listed above by providing a user equipment for use in a telecommunications system comprising at least a first base station and a second base station, wherein said user equipment comprises a memory for storing instructions and data, a radio-frequency interface for communicating with said first and second base stations, and a controller, wherein said controller is configured to transmit, over said radio-frequency interface, a measurement to said first base station, wherein said measurement relates to a received signal strength at said second base station in said telecommunications system. The controller is further configured to receive a reconfiguration message from said first base station over said radio-frequency interface, wherein said reconfiguration message relates to a reconfiguration command for said user equipment to reconfigure a transmitting power of said user equipment with reference to said received signal strength at said second base station, and wherein said user equipment, after reconfiguration, transmits all uplink data only to said second base station at a transmission power that is lower than a transmission power required to transmit all the uplink data to the first base station, and receive downlink data from said first base station.

It is a further object of the teachings of this application to overcome the problems listed above by providing a base station for use as a second base station in a telecommunications system, wherein said system further comprises at least a first base station and a user equipment, wherein said second base station comprises a memory for storing instructions and data, a radio-frequency interface for communicating with said user equipment, and a controller configured to receive uplink data from said user equipment over said radio-frequency interface, and forward said received uplink data from said user equipment to said first base station.

It is a further object of the teachings of this application to overcome the problems listed above by providing a telecommunications system comprising a base station according to the above, a user equipment according to the above and a second base station according to the above.

It is a further object of the teachings of this application to overcome the problems listed above by providing a method for use in a telecommunications system, said telecommunications system comprising a first base station, a second base station and a user equipment, said method comprising receiving, in said first base station, a measurement from said user equipment, said measurement relating to a received signal strength at said second base station in said telecommunications system. The method comprises determining a first path loss between said user equipment and said second base station based on said received signal strength. The method further comprises determining, if said first path loss is lower than a second path loss between said first base station and said user equipment, and, if so, sending a reconfiguration message from said first base station to said user equipment instructing said user equipment to reconfigure a transmitting power of said user equipment with respect to said second base station, wherein said user equipment reconfigures its transmit power with reference to said received signal strength at the second base station, wherein after reconfiguration, said user equipment transmits all uplink data only to said second base station at a transmission power that is lower than a transmission power required to transmit all the uplink data to the first base station, and
sending downlink data from said first base station to said user equipment. In one embodiment the method further comprises sending a reconfiguration message from said first base station to said second base station instructing said second base station to receive said uplink data from said user equipment. The method further comprises receiving uplink data in said first base station from said second base station, wherein said uplink data originates from said user equipment.

It is a further object of the teachings of this application to overcome the problems listed above by providing a computer-readable medium comprising instructions which when executed by a processor cause the method according to the above to be performed.

This allows a base station to enable a user equipment to operate at a lower power level while maintaining a same signal quality level. Alternatively or additionally this also allows base stations to be utilized to the full extent in a telecommunications system without causing increased latency for requests.

The inventors of the present invention have realized, after inventive and insightful reasoning, that by scheduling a user equipment to receive downlink data from one base station and transmitting or sending uplink data to another base station it is possible to take full advantage of a system's computational resources and/or to reduce the power needed for the user equipment while maintaining a same signal quality level.

It is a further object of the teachings of this application to overcome the problems listed above by providing a base station according to the above, further configured to determine a first load level at said base station, receive said measurement from said second base station, wherein said measurement relates to a second load level at said second base station in said system, and determine if said first load level is high, and, if so, determine if said second load level is low, and, if so, send said reconfiguration message to said user equipment instructing said user equipment to reconfigure a transmitting power of said user equipment with respect to said second base station. This allows for a system's resources to be utilized without causing increased latency.

It is a further object of the teachings of this application to overcome the problems listed above by providing a base station according to the above, further configured to receive said measurement from said user equipment, said measurement relating to at least one received signal power from said second base station in said
system, determine a first path loss between said user equipment and said second base station, determine if said first path loss is lower than a second path loss between said base station and said user equipment, and, if so, send said reconfiguration message to said user equipment instructing said user equipment to reconfigure a transmitting power of said user equipment with respect to said second base station. This allows a user equipment to operate at a reduced power level while maintaining the same signal quality level.

It should be noted that all through this application the terminology used inn relation to reconfigure a transmitting power includes to control or regulate the transmitting power.

The teachings herein find use in telecommunication systems having more than one base station and where the cells that are serviced by the base stations overlap at least partially. Examples of such telecommunications systems are 3GPP (3^{rd} Generation Partnership Project), LTE (long Term Evolution), LTE Advanced, GSM (Global System for Mobile Communications), GPRS (General Packet Radio Service), EDGE (Enhanced Data rates for GSM Evolution), or UMTS (Universal Mobile Telecommunications System), to name a few.

Other features and advantages of the disclosed embodiments will appear from the following detailed disclosure, from the attached dependent claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF DRAWINGS

The invention will be described in further detail below with reference to the accompanying drawings, in which:
Figure 1 shows a schematic view of a system according to one embodiment of the teachings of this application;
Figure 2A shows a schematic illustration of an exemplary system according to one embodiment of the teachings of this application;
Figure 2B shows a schematic illustration of an exemplary system according to one embodiment of the teachings of this application;
Figure 3A and 3B are time dependency graphs illustrating the messages sent between various devices in a telecommunications system according to one embodiment of the teachings of this application;
Figure 4A, 4B and 4C are flow charts illustrating methods performed by various devices in a telecommunications system according to one embodiment of the teachings of this application;
Figure 5 is a schematic block view of a base station according to one embodiment of the teachings of this application; and
Figure 6 is a schematic block view of a user equipment according to one embodiment of the teachings of this application.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

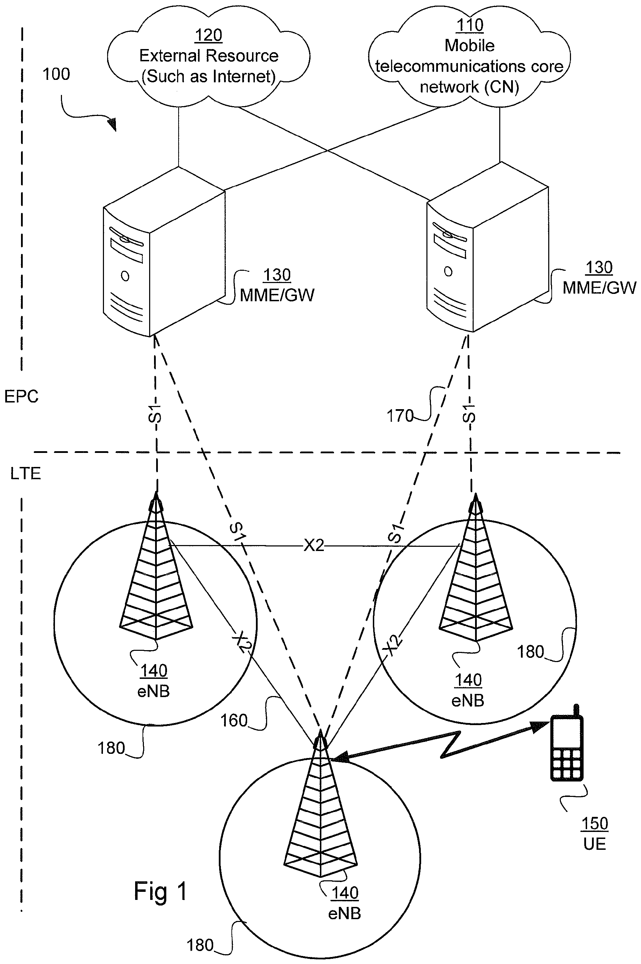

Figure 1 shows a schematic view of the general structure of a telecommunications system 100 according to the teachings herein. The telecommunications system 100 comprises at least one server 130. In one embodiment such a server is a Mobility Management Entity (MME) and/or a Gateway (GW). In figure 1 two such servers 130 are shown. The servers 130 are configured to communicate with a mobile telecommunications core network (CN) 110 and/or an external resource 120 such as the internet. In one embodiment the servers 130 are configured to communicate with other devices using a packet switched technology or protocol. In such an embodiment the servers 130 may make up an Evolved Packet Core (EPC) layer.

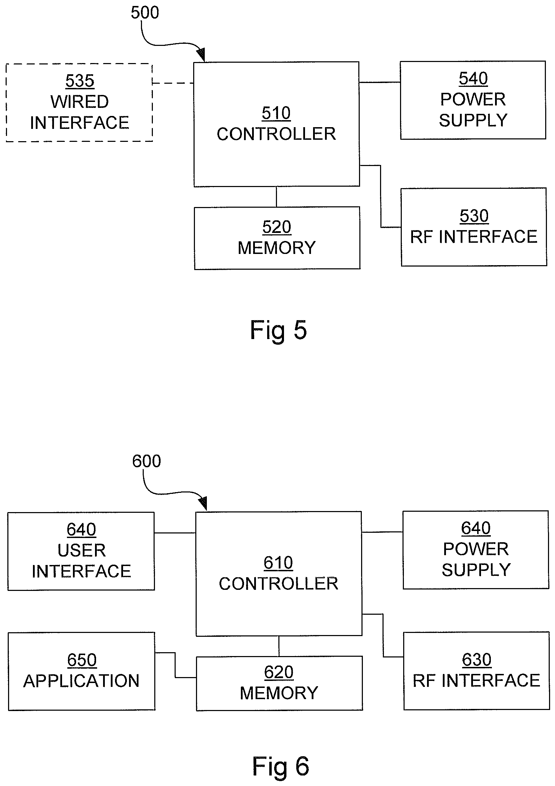

The servers are configured to communicate with nodes, also referred to as base stations 140. Figure 5 gives a detailed view of the general structure of a base station 500. In one embodiment the base station 140 is an evolved Node Base (eNB). A base station, such as the base station 140 in figure 1, is further configured to communicate with one or more of the servers 130. In one embodiment the communication between a server 130 and a base station 140 is effected through a standard or protocol 170. In one embodiment the protocol is S1. A base station, such as the base station 140 in figure 1, is configured to communicate with other base station(-s) 140. In one embodiment the communication between the base station 140 and another base station 140 is effected through a standard or protocol 160. In one embodiment the protocol 160 is X2. A base station, such as the base station 140 in figure 1, is further configured to handle or service a cell 180. In one embodiment the base stations 140 make up a Long Term Evolution (LTE) layer. In one embodiment the base stations 140 make up an LTE Advanced layer.

In one embodiment a base station, such as the base station 140 in figure 1, is configured to communicate with a mobile telecommunications device 150 (600) through a wireless radio frequency protocol. Figure 6 shows a mobile communications device in more detail.

In one embodiment a base station, such as the base station 140 in figure 1, is configured to cover or handle a large geographical area, a macro cell, and is denoted to be a macro base station. A macro cell may have a radius of up to and around 100 km.

In one embodiment a base station, such as the base station 140 in figure 1, is configured to cover or handle a small geographical area, such as a pico cell, and is denoted to be a pico base station. A pico cell may have a radius of around 10-100 m.

It should be noted that other types of base stations 140 are also possible and are covered by the scope of this application. Figure 5 shows a base station in more detail.

In one embodiment the telecommunications system 100 comprises both a first base station 140 which is configured to cover or handle a large geographical area and a second base station 140 which is configured to cover or handle a small geographical area. Such a system 100 is referred to as being a heterogeneous system 100.

In one embodiment the telecommunications system 100 comprises both a first base station 140 and a second base station 140 that are both configured to cover or handle a geographical area of approximately equal sizes or capacities. Such a system 100 is referred to as being a homogeneous system 100.

In one embodiment the telecommunications system 100 is an Evolved Packet System (EPS) system.

In one embodiment the telecommunications system is a system based on the 3GPP (3^{rd} Generation Partnership Project) standard. In one embodiment the telecommunications system is a system based on the UMTS (Universal Mobile Telecommunications System) standard.

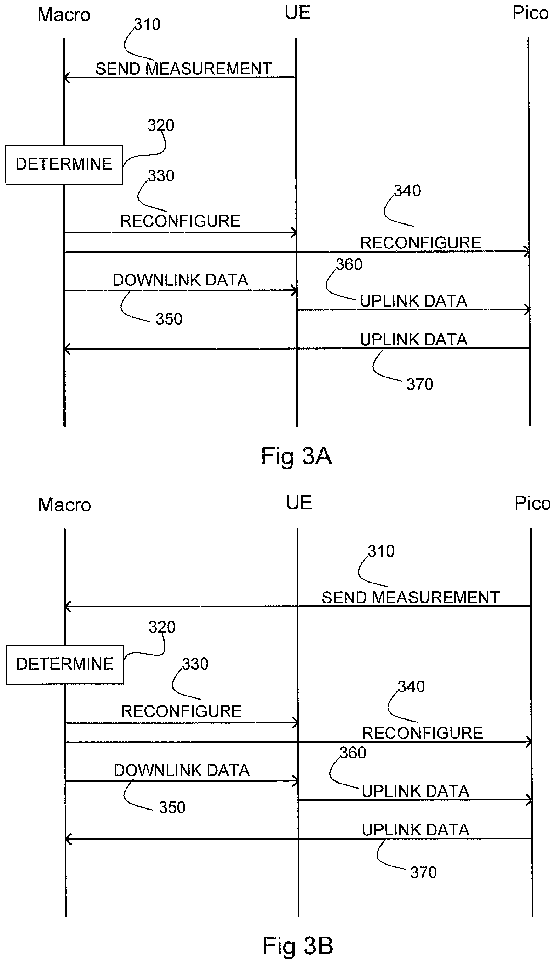

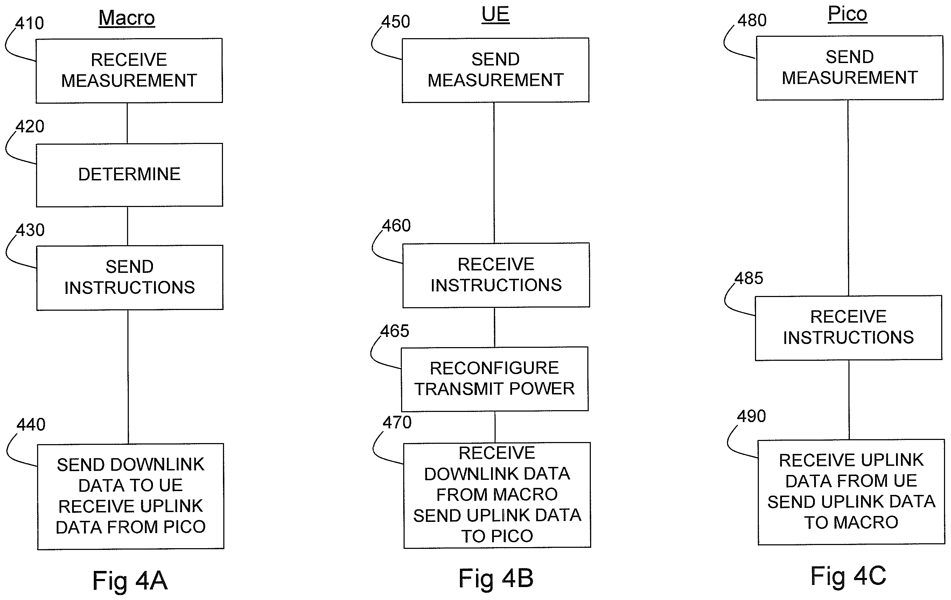

In the following description reference will be given concurrently to figures 2A and 2B, 3A and 3B, and 4A, 4B and 4C. Figures 2A-B are schematic views of a telecommunications system, wherein figure 2A illustrates a problem situation in a telecommunications system and figure 2B illustrates a solution to the problem of figure 2A. Figure 3A is a time dependency graph illustrating the messages sent between various devices in a communication system according to figures 1 and 2A-B. Figures 4A-C are a series of flow charts illustrating methods performed by various devices in the communication system according to figures 1 and 2A-B.

In figure 2A the macro base station 210 is at a certain distance to the first UE 230 and the pico eNB 220 is at another, closer distance to the first UE 230. In real life, the actual distances are not relevant, but it is the path loss, that a signal is subjected to when being transmitted between a base station 210, 220 and a User Equipment (UE) 230, 240, that is most relevant to the received signal quality.

The inventors have realized that in certain situations a UE 230, 240 will be in a position where it can be serviced by two base stations 210, 220. Based on a measurement, a base station 210 is configured to instruct a UE 230 to reconfigure a transmitting power Tx of the UE 230 with respect to a second base station 220. It should be noted that the transmitting power that is to be adjusted with respect to the second base station 220 is the transmitting power of the UE 230 unless explicitly disclosed to be otherwise hereafter. The UE 230 is configured to control or reconfigure the transmitting power with reference to a received signal strength at the second base station 220. Furthermore, the second base station 220 is to be instructed to intercept and receive uplink data from the UE 230. The first base station 210 is configured to send a reconfiguration message to the second base station 220 instructing it to receive uplink data 260 from the UE 230. In one alternative embodiment, the UE 230 is configured to send a reconfiguration message to the second base station 220 instructing it to receive uplink data 260 from the UE 230. By allowing the first base station 210 to instruct the second base station 220 to receive uplink data 260 from the UE 230 no changes to the UE 230 are necessary. The UE 230 does not establish a new channel to the second base station, but keeps on working as if it was communicating only with the first base station 210. It is the second base station 220 that intercepts the uplink data 260 and forwards it to the first base station 210, possibly after some processing of the data.

Thus, the inventors have realized that in a situation, where a first UE 230 is in a position where it receives the strongest signal from a macro eNB 210, while at the same time it has the lowest path loss to a pico eNB 220, the communications system 200 can take advantage of the lower path loss by allowing the first UE 230 to set up a downlink channel to the macro eNB 210 and configure its transmitting power with respect to the pico eNB 220. This allows the UE 230 to receive a signal at a high power level, and thereby at a high quality, while being able to transmit an uplink signal to the pico eNB 220 that will be received in high quality, while being transmitted at a lower transmitting power than would have been needed to transmit the same signal at the same received quality level to the macro eNB 210. In this embodiment the measurement received relates to a path loss.

In one embodiment a controller 510 (see figure 5) of the base station 210 is configured to receive a measurement 410 (in figure 4A the base station 210 is referred to as Marcro), wherein the measurement relates to a received signal strength at the base station 220. The controller 510 of the base station 210 is further configured to determine 320, 420 a path loss between the base station and the user equipment by comparing the received signal strength to the transmitted signal strength. The measurement of the transmitted signal power, and, also, the received signal strength at a second base station 220, is available from the UE 230, and in one embodiment the UE 230 is configured to send a measurement 310 to the base station 210. The UE 230 notes at which transmit power level a signal is transmitted and prompts a receiving base station 220 for the received signal strength. In one embodiment the second base station 220 is configured to push the received signal strength to the UE 230. In one embodiment the received signal strength is given by an RSSI measurement (Received Signal Strength Indicator). In one embodiment the received signal strength is given by an RCPI measurement (Received Channel Power Indicator). In one embodiment the received signal strength is given by an RSRP measurement (Reference Signal Received Power).

In one embodiment the controller 510 of the base station 210 is configured to determine 320 the path loss using prediction technologies such as statistical prediction or deterministic prediction. In such an embodiment the controller is configured to receive 410 the measurement as an internal prediction of the path loss between the UE 230 and an eNB 210, 220. In one embodiment the controller is configured to determine one path loss based on signal strength measurements and one path loss based on prediction.

The controller 510 is further configured to determine 320, 420 if the UE 230 should be reconfigured by comparing a path loss between the pico base station 220 and the UE 230 with a path loss between the macro base station 210 and the UE 230. In more general terms, this implies that a first base station (the macro base station in the example of figure 2A) 210 is configured to compare the path loss between a second base station 220 (the pico base station in the example of figure 2A) and a UE 230 with a path loss between the first base station 210 and the UE 230. If the path loss between the first base station 210 and the UE 230 is higher than the path loss between the second base station 220 and the UE 230, the controller 510 is configured to send 430 a reconfiguration message 330 to the UE 230 instructing the UE 230 to reconfigure its transmitting power according to the second base station 220. In one embodiment the controller 510 is configured to send an RRC (Radio Resource Control) message to the UE 230 instructing the UE 230 to reconfigure its transmitting power of the UE 230 with respect to the second base station 220. In one embodiment a controller 610 (see figure 6) of the UE 230 is configured to receive 460 the reconfiguration message 330 and in response thereto to reconfigure its transmitting power 465 with respect to the second base station 220. In one embodiment the controller 510 is configured to determine if the path loss between a second base station 220 (the pico base station in the example of figure 2A) and a UE 230 is greater than the path loss between the first base station 210 and the UE 230 by an offset value and if so, send the reconfiguration message as described in the above.

It should be noted that a path loss between two devices may be expressed in decibel (dB) using a logarithmic scale or in Watts (W) using a linear scale.

In one embodiment the controller 510 of the base station 210 is configured to instruct the UE 230 via the reconfiguration message to control a sending or transmitting power of the UE 230 with respect to the path loss between the second (pico) base station 220 and the UE 230.

In one embodiment the controller 510 of the first base station 210 is further configured to send a reconfiguration message 340 to the second base station 220, and the controller 510 of the second base station 220 is configured to receive the reconfiguration message 340. In one embodiment the reconfiguration message 340 is a message instructing the second base station to receive uplink data from the UE 230 and to forward the uplink data to the first base station 210. In one embodiment the second base station is configured to transmit the uplink data over a wireless interface 280. In one embodiment the second base station is configured to transmit the uplink data over a wired interface 280. In one such embodiment the wired interface 280 is implemented through an optical cable. In one embodiment the second base station is configured to transmit the uplink data over an X2 interface 280.

Thereafter the first base station 210 transmits (all) downlink data 440 to the UE 230 over a down link channel 255, 265, the UE transmits (all) uplink data 470 using a transmitting power adjusted according to the second base station 220, and the second base station 220 receives and forwards the uplink data 490 to the first base station 210.

This enables the UE 230 to receive all downlink data, such as PDSCH (Physical Downlink Shared CHannel) 255 and PDCCH (Physical Downlink Control CHannel) 265, from the macro base station 210 at a high signal quality, while transmitting all uplink data 260, such as PUSCH (Physical Uplink Shared CHannel) and PUCCH (Physical Uplink Control CHannel), to the pico base station 220 at a lower power level than would have been needed to transmit the uplink data at a same received quality level, thereby draining less power from the UE 230 and also causing less interference to other UEs 240 in neighbouring cells. The UE 230 is further unaware of which base station is actually receiving the uplink data 260 which enables the teachings herein to be used with contemporary UEs 230 without any modifications apart from that the UE 230 supports reconfiguration of its transmitting power to a non-serving cell, that is a cell that it is not communicating with.

In one embodiment the first base station 210 is configured to instruct the UE 230 to reconfigure its transmitting power with respect to the second base station 220 and the first base station keeps receiving the uplink data 260 from the UE 230 and does not instruct the second base station 220 to receive and forward the uplink data 260. This enables the UE 230 to transmit at a power level that does not cause interference to the other units such as second base stations 220 and other UEs 240.

In a situation where the task load of a telecommunications system 100 is high, it is beneficial if a base station is able to finish its tasks more quickly as this reduces the task load on the system 100 as a whole. In one embodiment the first base station is configured to instruct a UE 230 to adjust its transmitting power with respect to the first base station 210 to allow the first base station 210 to receive signals clearly using a high signal strength and thereby to be able to finish its tasks quickly. This finds particular use in a telecommunications system 100 experiencing a high task load. In one embodiment the first base station 210 is configured to determine if so should be done by comparing task loads of a first base station 210 and a second base station 220. In such an embodiment the measurement relates to a task load of a base station 210, 220. In one embodiment the first base station 210 is configured to also determine a first task load of the first base station 210. The second base station 220, in one embodiment being a pico base station, is configured to send a measurement of a second task load level in the second base station 220 to the first base station 210. In one embodiment the first base station 210 is configured to prompt the second base station 220 for the second task load level measurement. The first base station 210 is configured to receive the measurement from the second base station 220.

The first base station 210 is configured to determine if the first task load is high, and if so, determine if the second task load is low, and if so, send a reconfiguration message to a UE 230 that instructs the UE 230 to reconfigure its transmitting power with respect to the first base station 210. In one embodiment the UE 230 is configured to adjust its transmitting power with respect to the first base station 210 and to send uplink data 260 using a COMP (COordinated MultiPoint). The controller 510 is further configured to use high transmitting powers of the UE 230 to ensure that the base station is able to receive signals at high quality.

The first base station 210 is further configured to determine if the first task load is high, and if so, determine if the second task load is high, and if so, configure a smart antenna MU-MIMO (Multiple User- Multiple-Input Multiple-Output) system and to send a reconfiguration message to said second base station 220 instructing it to implement necessary settings to set up the MU-MIMO system. In one embodiment the MU-MIMO system comprises one UL COMP base station and one base station not being supported by COMP. The controller 510 is further configured to instruct the UE 230 to use adjusted transmitting powers of the UE 230 to reduce interference in the system 100.

The inventors have further realized after insightful reasoning that by enabling a UE to be configured to communicate with more than one eNB further benefits can be achieved. This includes allowing for utilizing a system's resources to the full extent or at a higher capacity without severely increasing the latency in the system for requests. In one embodiment the measurement relates to a task load of a base station 210, 220. Figure 3B shows a time diagram of the operations of the first (macro) base station, the user equipment UE and the second (pico) base station.

A second base station 220, in one embodiment being a pico base station, is configured to send 480 a measurement 310 of a current task load level in the second base station 220 to a first base station 210. In one embodiment the first base station 210 is configured to prompt the second base station 220 for the task load level measurement. The first base station 210 is configured to receive the measurement 410 and to determine 320, 420 whether a task load of the first base station 210 is higher than a task load level of the second base station 220, and if so, the controller 510 is configured to send 430 a reconfiguration message 330 to the UE 230 instructing the UE 230 to reconfigure its transmitting power with respect to the second base station 210. In one embodiment the controller 510 is configured to send an RRC (Radio Resource Control) message to the UE 230 instructing the UE to reconfigure the transmitting power with respect to the second base station 220. In one embodiment a controller 610 of the UE 230 is configured to receive 460 the reconfiguration message 330 and in response thereto reconfigure the transmitting power 465 with respect to the second base station 220. In one embodiment the UE 230 is configured to reconfigure the transmitting power of the UE 230 with respect the second base station 220 and to transmit uplink data 260 to the second base station 220 using a COMP (COordinated MultiPoint). In one embodiment the controller 510 of the first base station 210 is further configured to send a reconfiguration message 340 to the second base station 220. A controller 510 of the second base station is configured to receive the reconfiguration message 340. In one embodiment the reconfiguration message 340 is a message instructing the second base station to receive uplink data 260 from the UE 230, to process the uplink data and to forward the result of the processing of the uplink data to the first base station 210. In one embodiment the second base station is configured to transmit the uplink data and/or the result of the processing of the uplink data over a wireless interface 280. In one embodiment the second base station is configured to transmit the uplink data and/or the result of the processing of the uplink data over a wired interface 280. In one such embodiment the wired interface 280 is implemented through an optical cable. In one embodiment the second base station is configured to transmit the uplink data and/or the result of the processing of the uplink data over an X2 interface 280.

Thereafter, the first base station 210 transmits all downlink data 440 to the UE 230 over a down link channel 255, 265, the UE transmits all uplink data 470 using the adjusted transmitting power to the second base station 220, and the second base station 220 receives and processes the uplink data and transmits or sends the result of the processing of the uplink data 490 to the first base station 210. In one embodiment the second base station 220 only partially processes the uplink data 260, and forwards the partially processed data to the first base station 210 for further processing. In one embodiment the second base station does not process the uplink data 260, but forwards it directly to the first base station 210.

This enables the first base station 210 to relieve some of its task loading by allowing a second base station to process some of its tasks, processes or requests from UEs 150, 230, 240. This enables the system 100 to maintain a lower latency in the system 100 as the base stations 140, 210, 220 are enabled to share a task or work load.

This embodiment finds equal use in heterogeneous systems as well as homogeneous systems.

It should be noted that all embodiments disclosed herein all find beneficial use in both heterogeneous systems as well as homogeneous systems.

A base station as disclosed herein find beneficial use in telecommunications systems such as 3GPP (3rd Generation Partnership Project), LTE (long Term Evolution), LTE Advanced, GSM (Global System for Mobile Communications), GPRS (General Packet Radio Service), EDGE (Enhanced Data rates for GSM Evolution) or UMTS (Universal Mobile Telecommunications.

Figure 5 shows a schematic view of the general structure of a base station 500 according to one embodiment herein. The base station 500 may for instance be any of the aforementioned base stations (eNBs) 140, 210 or 220. The base station 500 comprises a controller 510, as already mentioned. The controller 510 may be implemented using instructions that enable hardware functionality, for example, by using executable computer program instructions in a general-purpose or special-purpose processor that may be stored on a computer readable storage medium (disk, memory etc) 520 to be executed by such a processor. The controller 510 is configured to read instructions from the memory 520 and execute these instructions to control the operation of the base station 500. The memory may be implemented using any commonly known technology for computer-readable memories such as ROM, RAM, SRAM, DRAM, CMOS, FLASH, DDR, SDRAM or some other memory technology. In the memory 520 there are stored set of instructions that when executed by the controller 510 control the operation of the base station 500. The base station 500 further comprises at least one radio frequency (RF) interface 530. The base station 500 is configured to communicate with mobile communications devices (600) through the at least one RF interface 530. In one embodiment the base station 500 is configured to communicate with other base stations through the at least one RF interface 530. In one embodiment the radio frequency interface is an X2 interface.

In one embodiment the base station 500 further comprises a wired interface 535. In such an embodiment the base station 500 is configured to communicate with other base stations or a server through the wired interface 535. The base station 500 also comprises a power supply 540.

Figure 6 shows a schematic view of the general structure of a mobile device 600 according to one embodiment herein. The mobile device 600 may for instance be any of the aforementioned UEs 230, 240 or 150. In the embodiment shown the mobile device is a mobile phone 600. In other embodiments the mobile communications device 600 is a personal digital assistant, a media player or any handheld device capable of communicating with other devices. The mobile device 600 comprises a controller 610, as already mentioned. The controller 610 may be implemented using instructions that enable hardware functionality, for example, by using executable computer program instructions in a general-purpose or special-purpose processor that may be stored on a computer readable storage medium (disk, memory etc) 620 to be executed by such a processor. The controller 610 is configured to read instructions from the memory 620 and execute these instructions to control the operation of the mobile device 600. The memory may be implemented using any commonly known technology for computer-readable memories such as ROM, RAM, SRAM, DRAM, CMOS, FLASH, DDR, SDRAM or some other memory technology. The mobile device 100 further comprises one or more applications 650. The applications are set of instructions that when executed by the controller 610 control the operation of the mobile device 600. The applications 650 may be stored on the memory 620. Examples of applications 650 are voice call applications, messaging applications, utility applications and recreational applications. The teachings disclosed herein may be implemented through a software program and/or as a hardware programmed circuit.

References to 'computer-readable storage medium', 'computer program product', 'tangibly embodied computer program' etc. or a 'controller', 'computer', 'processor' etc. should be understood to encompass not only computers having different architectures such as single/multi-processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

One benefit of the teachings herein is that a maximum use of the base stations 140 in a telecommunications system 100 is achieved. Another benefit is that a user equipment is enabled to operate at a reduced power level while maintaining the same signal quality.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A first base station (140, 210) for use in a telecommunications system (200) which further comprises at least a second base station (140, 220) and a user equipment (230), wherein said first base station (140, 210) comprises:
a memory (520) for storing instructions and data;
a radio-frequency interface (530) for communicating with said user equipment (230); and
a controller (510), wherein said controller (510) is configured to:
receive a measurement from said user equipment (230), wherein said measurement relates to a received signal strength at said second base station (140, 220) in said telecommunications system (200);
determine a first path loss between said user equipment (230) and said second base station (140, 220) based on the received signal strength;
determine, if said first path loss is lower than a second path loss between said first base station (140, 210) and said user equipment (230); and, if so,
send a reconfiguration message to said user equipment (230) instructing said user equipment (230) to reconfigure a transmitting power of said user equipment (230) with respect to said second base station (140, 220) for use by said user equipment (230) to reconfigure its transmit power with reference to said received signal strength at the second base station (140, 220), wherein said user equipment (230), after reconfiguration, transmits all uplink data (260) only to said second base station (140, 220) at a transmission power that is lower than a transmission power required to transmit all the uplink data (260) to the first base station (140, 210), and wherein said first base station (140, 210) is configured to send downlink data to said user equipment (230); and
send a reconfiguration message to said second base station (140, 220) instructing said second base station (140, 220) to receive said uplink data (260) from said user equipment (230), wherein said first base station (140, 210) is further configured to receive said uplink data (260) from said second base station (140, 220), said uplink data (260) originating from said user equipment (230).

2. The first base station (140, 210) according to claim 1, wherein said controller (510) is further configured to determine said first path loss based on a sending power of said second base station (140, 220) as the difference between said sending power of said second base station (140, 220) and a received signal power from said second base station (140, 220).

3. The first base station (140, 210) according to any preceding claim, further configured to instruct said user equipment (230) to control said transmitting power of said user equipment (230) according to a path loss between said second base station (140, 220) and said user equipment (230), allowing said user equipment (230) to transmit said uplink data (260) at a reduced power level.

4. A user equipment (230) for use in a telecommunications system (200) comprising at least a first base station (140, 210) and a second base station (140, 220), wherein said user equipment (230) comprises:
a memory (620) for storing instructions and data;
a radio-frequency interface (630) for communicating with said first base station (140, 210) and said second base station (140, 220); and
a controller (610), wherein said controller (610) is configured to:
transmit, over said radio-frequency interface (630), a measurement to said first base station (140, 210), wherein said measurement relates to a received signal strength at said second base station (140, 220) in said telecommunications system (200),
receive a reconfiguration message from said first base station (140, 210) over said radio-frequency interface (630), wherein said reconfiguration message relates to a reconfiguration command for said user equipment (230) to reconfigure a transmitting power of said user equipment (230) with reference to said received signal strength at said second base station (140, 220), and wherein said user equipment (230), after reconfiguration, transmits all uplink data (260) only to said second base station (140, 220) at a transmission power that is lower than a transmission power required to transmit all the uplink data (260) to the first base station (140, 210), and
receive downlink data from said first base station (140, 210).

5. The user equipment (230) according to claim 4, wherein said controller (610) is further configured to send said uplink data (260) to said second base station (140, 220).

6. The user equipment (230) according to any of claims 4-5, wherein said controller (610) is further configured to receive a request from said first base station (140, 210) for said measurement and in response thereto send said reconfiguration message over said radio-frequency interface (630).

7. The user equipment (230) according to any of claims 4-6, wherein said controller (610) is further configured to send said reconfiguration message over said radio-frequency interface (630) to said first base station (140, 210) at a regular time interval.

8. A method for use in a telecommunications system (200), said telecommunications system (200) comprising a first base station (140, 210), a second base station (140, 220), and a user equipment (230), said method comprising:
receiving, in said first base station (140, 210), a measurement from said user equipment (230), said measurement relating to a received signal strength at said second base station (140, 220) in said telecommunications system (200);
determining a first path loss between said user equipment (230) and said second base station (140, 220) based on the received signal strength;
determining, if said first path loss is lower than a second path loss between said first base station (140, 210) and said user equipment (230); and, if so,
sending a reconfiguration message from said first base station (140, 210) to said user equipment (230) instructing said user equipment (230), to reconfigure a transmitting power of said user equipment (230) with respect to said second base station (140, 220), wherein said user equipment (230) reconfigures its transmit power with reference to said received signal strength at the second base station (140, 220), and wherein said user equipment (230), after reconfiguration, transmits all uplink data (260) only to said second base station (140, 220) at a transmission power that is lower than a transmission power required to transmit all the uplink data (260) to the first base station (140, 210);
sending downlink data from said first base station (140, 210) to said user equipment (230); and
sending a reconfiguration message from said first base station (140, 210) to said second base station (140, 220) instructing said second base station (140, 220) to receive said uplink data (260) from said user equipment (230), wherein said first base station (140, 210) further receives said uplink data (260) from said second base station (140, 220), said uplink data (260) originating from said user equipment (230).

9. The method according to claim 8, further comprising determining said first path loss based on a sending power of said second base station (140, 220) as the difference of said sending power of said second base station (140, 220) and a received signal power from said second base station (140, 220).

## Patentansprüche

1. Erste Basisstation (140, 210) zur Verwendung in einem Telekommunikationssystem (200), das ferner zumindest eine zweite Basisstation (140, 220) und eine Benutzervorrichtung (230) umfasst, wobei die erste Basisstation (140, 210) Folgendes umfasst:
einen Speicher (520) zum Speichern von Anweisungen und Daten;
eine Funkfrequenzschnittstelle (530) zum Kommunizieren mit der Benutzervorrichtung (230); und
eine Steuerung (510), wobei die Steuerung (510) für Folgendes konfiguriert ist:
Empfangen einer Messung von der Benutzervorrichtung (230), wobei die Messung eine empfangene Signalstärke an der zweiten Basisstation (140, 220) in dem Telekommunikationssystem (200) betrifft;
Bestimmen eines ersten Pfadverlustes zwischen der Benutzervorrichtung (230) und der zweiten Basisstation (140, 220) basierend auf der empfangenen Signalstärke;
Bestimmen, ob der erste Pfadverlust geringer als ein zweiter Pfadverlust zwischen der ersten Basisstation (140, 210) und der Benutzervorrichtung (230) ist; und falls ja,
Senden einer Rekonfigurationsnachricht an die Benutzervorrichtung (230), die die Benutzervorrichtung (230) anweist, eine Übertragungsleistung der Benutzervorrichtung (230) in Bezug auf die zweite Basisstation (140, 220) zur Verwendung durch die Benutzervorrichtung (230) zu rekonfigurieren, um ihre Übertragungsleistung in Bezug auf die empfangene Signalstärke an der zweiten Basisstation (140, 220) zu rekonfigurieren, wobei die Benutzervorrichtung (230) nach der Rekonfiguration alle Uplink-Daten (260) nur an die zweite Basisstation (140, 220) bei einer Übertragungsleitung überträgt, die geringer als eine Übertragungsleistung ist, die erforderlich ist, um alle Uplink-Daten (260) an die erste Basisstation (140, 210) zu übertragen, und wobei die erste Basisstation (140, 210) konfiguriert ist, um Downlink-Daten an die Benutzervorrichtung (230) zu senden; und
Senden einer Rekonfigurationsnachricht an die zweite Basisstation (140, 220), die die zweite Basisstation (140, 220) anweist, die Uplink-Daten (260) von der Benutzervorrichtung (230) zu empfangen, wobei die erste Basisstation (140, 210) ferner konfiguriert ist, um die Uplink-Daten (260) von der zweiten Basisstation (140, 220) zu empfangen, wobei die Uplink-Daten (260) von der Benutzervorrichtung (230) ausgehen.

2. Erste Basisstation (140, 210) nach Anspruch 1, wobei die Steuerung (510) ferner konfiguriert ist, um den ersten Pfadverlust basierend auf einer Sendeleistung der zweiten Basisstation (140, 220) als Unterschied zwischen der Sendeleistung der zweiten Basisstation (140, 220) und einer empfangenen Signalleistung von der zweiten Basisstation (140, 220) zu bestimmen.

3. Erste Basisstation (140, 210) nach einem vorhergehenden Anspruch, die ferner konfiguriert ist, um die Benutzervorrichtung (230) anzuweisen, die Übertragungsleistung der Benutzervorrichtung (230) gemäß einem Pfadverlust zwischen der zweiten Basisstation (140, 220) und der Benutzervorrichtung (230) zu steuern, wodurch der Benutzervorrichtung (230) ermöglicht wird, die Uplink-Daten (260) bei einem reduzierten Leistungsniveau zu übertragen.

4. Benutzervorrichtung (230) zur Verwendung in einem Telekommunikationssystem (200), das zumindest eine erste Basisstation (140, 210) und eine zweite Basisstation (140, 220) umfasst, wobei die Benutzervorrichtung (230) Folgendes umfasst:
einen Speicher (620) zum Speichern von Anweisungen und Daten;
eine Funkfrequenzschnittstelle (630) zum Kommunizieren mit der ersten Basisstation (140, 210) und der zweiten Basisstation (140, 220); und
eine Steuerung (610), wobei die Steuerung (610) für Folgendes konfiguriert ist:
Übertragen einer Messung an die erste Basisstation (140, 210) über die Funkfrequenzschnittstelle (630), wobei die Messung eine empfangene Signalstärke an der zweiten Basisstation (140, 220) in dem Telekommunikationssystem (200) betrifft,
Empfangen einer Rekonfigurationsnachricht von der ersten Basisstation (140, 210) über die Funkfrequenzschnittstelle (630), wobei die Rekonfigurationsnachricht einen Rekonfigurationsbefehl für die Benutzervorrichtung (230) betrifft, um eine Übertragungsleistung der Benutzervorrichtung (230) in Bezug auf die empfangene Signalstärke an der zweiten Basisstation (140, 220) zu rekonfigurieren, und wobei die Benutzervorrichtung (230) nach der Rekonfiguration alle Uplink-Daten (260) nur an die zweite Basisstation (140, 220) bei einer Übertragungsleistung überträgt, die geringer als eine Übertragungsleistung ist, die erforderlich ist, um alle Uplink-Daten (260) an die erste Basisstation (140, 210) zu übertragen, und
Empfangen von Downlink-Daten von der ersten Basisstation (140, 210) .

5. Benutzervorrichtung (230) nach Anspruch 4, wobei die Steuerung (610) ferner konfiguriert ist, um die Uplink-Daten (260) an die zweite Basisstation (140, 220) zu senden.

6. Benutzervorrichtung (230) nach einem der Ansprüche 4-5, wobei die Steuerung (610) ferner konfiguriert ist, um eine Anforderung von der ersten Basisstation (140, 210) für die Messung zu empfangen und als Reaktion darauf die Rekonfigurationsnachricht über die Funkfrequenzschnittstelle (630) zu senden.

7. Benutzervorrichtung (230) nach einem der Ansprüche 4-6, wobei die Steuerung (610) ferner konfiguriert ist, um die Rekonfigurationsnachricht in einem regelmäßigen Zeitintervall über die Funkfrequenzschnittstelle (630) an die erste Basisstation (140, 210) zu senden.

8. Verfahren zur Verwendung in einem Telekommunikationssystem (200), wobei das Telekommunikationssystem (200) eine erste Basisstation (140, 210), eine zweite Basisstation (140, 220) und eine Benutzervorrichtung (230) umfasst, wobei das Verfahren Folgendes umfasst:
Empfangen, in der ersten Basisstation (140, 210), einer Messung von der Benutzervorrichtung (230), wobei die Messung eine empfangene Signalstärke an der zweiten Basisstation (140, 220) in dem Telekommunikationssystem (200) betrifft;
Bestimmen eines ersten Pfadverlustes zwischen der Benutzervorrichtung (230) und der zweiten Basisstation (140, 220) basierend auf der empfangenen Signalstärke;
Bestimmen, ob der erste Pfadverlust geringer als ein zweiter Pfadverlust zwischen der ersten Basisstation (140, 210) und der Benutzervorrichtung (230) ist; und falls ja,
Senden einer Rekonfigurationsnachricht von der ersten Basisstation (140, 210) an die Benutzervorrichtung (230), die die Benutzervorrichtung (230) anweist, eine Übertragungsleistung der Benutzervorrichtung (230) in Bezug auf die zweite Basisstation (140, 220) zu rekonfigurieren, wobei die Benutzervorrichtung (230) ihre Übertragungsleistung in Bezug auf die empfangene Signalstärke an der zweiten Basisstation (140, 220) rekonfiguriert, und wobei die Benutzervorrichtung (230) nach der Rekonfiguration alle Uplink-Daten (260) nur an die zweite Basisstation (140, 220) bei einer Übertragungsleitung überträgt, die geringer als eine Übertragungsleistung ist, die erforderlich ist, um alle Uplink-Daten (260) an die erste Basisstation (140, 210) zu übertragen;
Senden von Downlink-Daten von der ersten Basisstation (140, 210) an die Benutzervorrichtung (230); und
Senden einer Rekonfigurationsnachricht von der ersten Basisstation (140, 210) an die zweite Basisstation (140, 220), die die zweite Basisstation (140, 220) anweist, die Uplink-Daten (260) von der Benutzervorrichtung (230) zu empfangen, wobei die erste Basisstation (140, 210) ferner die Uplink-Daten (260) von der zweiten Basisstation (140, 220) empfängt, wobei die Uplink-Daten (260) von der Benutzervorrichtung (230) ausgehen.

9. Verfahren nach Anspruch 8, ferner umfassend das Bestimmen des ersten Pfadverlustes basierend auf einer Sendeleistung der zweiten Basisstation (140, 220) als Unterschied der Sendeleistung der zweiten Basisstation (140, 220) und einer empfangenen Signalleistung von der zweiten Basisstation (140, 220) .

## Revendications

1. Première station de base (140, 210) destinée à être utilisée dans un système de télécommunications (200) qui comprend en outre au moins une seconde station de base (140, 220) et un équipement utilisateur (230), dans laquelle ladite première station de base (140, 210) comprend :
une mémoire (520) permettant de stocker des instructions et des données ;
une interface radiofréquence (530) permettant de communiquer avec ledit équipement utilisateur (230) ; et
un dispositif de commande (510), dans lequel ledit dispositif de commande (510) est configuré pour :
recevoir une mesure provenant dudit équipement utilisateur (230), dans laquelle ladite mesure se rapporte à une intensité du signal reçu au niveau de ladite seconde station de base (140, 220) dans ledit système de télécommunications (200) ;
déterminer un premier affaiblissement de propagation entre ledit équipement utilisateur (230) et ladite seconde station de base (140, 220) sur la base de l'intensité du signal reçu ;
déterminer si ledit premier affaiblissement de propagation est inférieur à un second affaiblissement de propagation entre ladite première station de base (140, 210) et ledit équipement utilisateur (230) ; et, si c'est le cas,
envoyer un message de reconfiguration audit équipement utilisateur (230) demandant à cet équipement utilisateur (230) de reconfigurer une puissance d'émission dudit équipement utilisateur (230) par rapport à ladite seconde station de base (140, 220) à utiliser par ledit équipement utilisateur (230) pour reconfigurer sa puissance d'émission en référence à ladite intensité du signal reçu au niveau de la seconde station de base (140, 220), dans laquelle ledit équipement utilisateur (230), après reconfiguration, transmet toutes les données en liaison montante (260) uniquement à ladite seconde station de base (140, 220) à une puissance d'émission inférieure à une puissance d'émission requise pour transmettre toutes les données en liaison montante (260) à la première station de base (140, 210), et dans laquelle ladite première station de base (140, 210) est configuré pour envoyer des données en liaison descendante audit équipement utilisateur (230) ; et
envoyer un message de reconfiguration à ladite seconde station de base (140, 220) demandant à ladite seconde station de base (140, 220) de recevoir lesdites données en liaison montante (260) provenant dudit équipement utilisateur (230), dans laquelle ladite première station de base (140, 210) est en outre configurée pour recevoir lesdites données en liaison montante (260) provenant de ladite seconde station de base (140, 220), lesdites données en liaison montante (260) venant dudit équipement utilisateur (230).

2. Première station de base (140, 210) selon la revendication 1, dans laquelle ledit dispositif de commande (510) est en outre configuré pour déterminer ledit premier affaiblissement de propagation sur la base d'une puissance d'envoi de ladite seconde station de base (140, 220) en tant que différence entre ladite puissance d'envoi de ladite seconde station de base (140, 220) et une puissance du signal reçu provenant de ladite seconde station de base (140, 220).

3. Première station de base (140, 210) selon une quelconque revendication précédente, configurée en outre pour demander audit équipement utilisateur (230) de commander ladite puissance d'émission dudit équipement utilisateur (230) en fonction d'un affaiblissement de propagation entre ladite seconde station de base (140, 220) et ledit équipement utilisateur (230), permettant audit équipement utilisateur (230) de transmettre lesdites données en liaison montante (260) à un niveau de puissance réduit.

4. Équipement utilisateur (230) à utiliser dans un système de télécommunications (200) comprenant au moins une première station de base (140, 210) et une seconde station de base (140, 220), dans lequel ledit équipement utilisateur (230) comprend :
une mémoire (620) permettant de stocker des instructions et des données ;
une interface radiofréquence (630) permettant de communiquer avec ladite première station de base (140, 210) et ladite seconde station de base (140, 220) ; et
un dispositif de commande (610), dans lequel ledit dispositif de commande (610) est configuré pour :
transmettre, sur ladite interface radiofréquence (630), une mesure à ladite première station de base (140, 210), dans lequel ladite mesure se rapporte à une intensité du signal reçu au niveau de ladite seconde station de base (140, 220) dans ledit système de télécommunications (200),
recevoir un message de reconfiguration provenant de ladite première station de base (140, 210) sur ladite interface radiofréquence (630), dans lequel ledit message de reconfiguration se rapporte à une commande de reconfiguration pour ledit équipement utilisateur (230) afin de reconfigurer une puissance d'émission dudit équipement utilisateur (230) en référence à ladite intensité du signal reçu au niveau de ladite seconde station de base (140, 220), et dans lequel ledit équipement utilisateur (230), après reconfiguration, transmet toutes les données en liaison montante (260) uniquement à ladite seconde station de base (140, 220) à une puissance d'émission inférieure à une puissance d'émission requise pour transmettre toutes les données en liaison montante (260) à la première station de base (140, 210), et
recevoir les données en liaison descendante provenant de ladite première station de base (140, 210).

5. Équipement utilisateur (230) selon la revendication 4, dans lequel ledit dispositif de commande (610) est en outre configuré pour envoyer lesdites données en liaison montante (260) à ladite seconde station de base (140, 220).

6. Équipement utilisateur (230) selon l'une quelconque des revendications 4 à 5, dans lequel ledit dispositif de commande (610) est en outre configuré pour recevoir une demande provenant de ladite première station de base (140, 210) pour ladite mesure et en réponse à celle-ci envoyer ledit message de reconfiguration sur ladite interface radiofréquence (630).

7. Équipement utilisateur (230) selon l'une quelconque des revendications 4 à 6, dans lequel ledit dispositif de commande (610) est en outre configuré pour envoyer ledit message de reconfiguration sur ladite interface radiofréquence (630) à ladite première station de base (140, 210) à un intervalle de temps régulier.

8. Procédé à utiliser dans un système de télécommunications (200), ledit système de télécommunications (200) comprenant une première station de base (140, 210), une seconde station de base (140, 220) et un équipement utilisateur (230), ledit procédé comprenant :
la réception, dans ladite première station de base (140, 210), d'une mesure provenant dudit équipement utilisateur (230), ladite mesure se rapportant à une intensité du signal reçu au niveau de ladite seconde station de base (140, 220) dans ledit système de télécommunications (200) ;
le fait de déterminer un premier affaiblissement de propagation entre ledit équipement utilisateur (230) et ladite seconde station de base (140, 220) sur la base de l'intensité du signal reçu ;
le fait de déterminer si ledit premier affaiblissement de propagation est inférieur à un second affaiblissement de propagation entre ladite première station de base (140, 210) et ledit équipement utilisateur (230) ; et, si c'est le cas,
l'envoi d'un message de reconfiguration provenant de ladite première station de base (140, 210) audit équipement utilisateur (230) demandant audit équipement utilisateur (230) de reconfigurer une puissance d'émission dudit équipement utilisateur (230) par rapport à ladite seconde station de base (140, 220), dans lequel ledit équipement utilisateur (230) reconfigure sa puissance d'émission en référence à ladite intensité du signal reçu au niveau de ladite seconde station de base (140, 220), et dans lequel ledit équipement utilisateur (230), après reconfiguration, transmet toutes les données en liaison montante (260) uniquement à ladite seconde station de base (140, 220) à une puissance d'émission inférieure à une puissance d'émission requise pour transmettre toutes les données en liaison montante (260) à la première station de base (140, 210) ;
l'envoi des données en liaison descendante provenant de ladite première station de base (140, 210) audit équipement utilisateur (230) ; et
l'envoi d'un message de reconfiguration provenant de ladite première station de base (140, 210) à ladite seconde station de base (140, 220) demandant à ladite seconde station de base (140, 220) de recevoir lesdites données en liaison montante (260) provenant dudit équipement utilisateur (230), dans lequel ladite première station de base (140, 210) reçoit en outre lesdites données en liaison montante (260) provenant de ladite seconde station de base (140, 220), lesdites données en liaison montante (260) venant dudit équipement utilisateur (230).

9. Procédé selon la revendication 8, comprenant en outre le fait de déterminer ledit premier affaiblissement de propagation sur la base d'une puissance d'envoi de ladite seconde station de base (140, 220) en tant que différence entre ladite puissance d'envoi de ladite seconde station de base (140, 220) et une puissance du signal reçu provenant de ladite seconde station de base (140, 220).
